# EUROPÄISCHE PATENTANMELDUNG

(11) **EP 0 771 959 A1**
(43) Veröffentlichungstag der Anmeldung: **07.05.1997**
(21) Anmeldenummer: 96117089.1
(22) Anmeldetag: 24.10.1996
(51) Int. Cl.: F16D 1/08, F16B 3/00

(54) **Wellen-Nabenverbindung mit mindestens einem Formschlusselement**

(30) Priorität: 30.10.1995 DE 19540432
(71) Anmelder: Truninger AG, 4513 Langendorf/Solothurn (CH)
(72) Erfinder: Truninger, Rolf, Dr. Ing., 4513 Langendorf/Solothurn (CH)
(74) Vertreter: Haug, Dietmar, Dipl.-Ing.

(57) **Zusammenfassung**

Eine Wellen-Nabenverbindung mit mindestens einem Formschlußelement (2) zur Momentenübertragung zwischen einer Welle (3) und einer Nabe (1), die umfassen jeweils mindestens eine Nut (10,11) und gegenüberliegenden Nutflanken (12a,12b,13a,13b) zur Aufnahme des Formschlußelements (2). Erfindungsgemäß sind die Nutflanken (12a,12b,13a,13b) der Welle (3) und der Nabe (1) so angeordnet, daß die bei der Momentenübertragung auftretenden Kräfte (F1,F2) annähernd auf einer Wirkungslinie (5) liegen. Die Nutflanken (12a,13b) sind jeweils senkrecht zu den bei der Momentenübertragung auftretenden Kräften (F1, F2) angeordnet.

Bei der Übertragung eines Moments zwischen Welle (3) und Nabe (1) tritt nur noch ein Kräftepaar, das auf einer Achse liegt und folglich kein Moment auf das Formschlußelement (2) ausübt. Ein Aufkippen oder Verdrehen des Formschlußelements (2) ist ausgeschlossen.

## Beschreibung

Die vorliegende Erfindung betrifft eine Wellen-Nabenverbindung mit mindestens einem Formschlußelement zur Momentenübertragung zwischen einer Welle und einer Nabe oder umgekehrt, wobei Welle und Nabe jeweils mindestens eine Nut mit gegenüberliegenden Nutflanken zur Aufnahme des Formschlußelements bzw. der Formschlußelemente umfassen.

Wellen-Nabenverbindungen mit Formschlußelementen gehören zu den Standard-Maschinenelementen. Sie dienen dazu, die Drehung einer Nabe relativ zu einer Welle oder Achse durch Formschluß zu verhindern. Die Nabe kann z.B. zu einem Rad, einem Zahnrad, einer Nockenwelle oder einer Turbinenstufe gehören. Durch den Formschluß zwischen Welle und Nabe können Drehmomente von der Welle auf die Nabe oder umgekehrt übertragen werden. Je nachdem welches Formschlußelement zum Einsatz kommt, ist es auch möglich, durch Kraftschluß zusätzlich eine Axialbewegung zwischen Nabe und Welle zu verhindern.

Es sind verschiedene Ausführungsformen von Wellen-Nabenverbindungen mit Formschlußelementen bekannt. Zwei typische Ausführungsformen sind z.B. der Federkeil bzw. die Paßfeder (VSM 15158, VSM 15161, DIN 6885 A, ISO R 773) sowie der Treib- und Nasenkeil (VSM 15162, DIN 6887).

Die Paßfeder nach DIN 6885 A verdankt ihre weite und anhaltende Verbreitung einer Reihe von Eigenschaften. Nut und Paßfeder sind so bemessen, daß sich die Paßfeder einfach in die Wellennut einlegen läßt. Die Nabe kann ebenfalls praktisch kräftefrei axial aufgeschoben werden. Aufgrund der Symmetrie der Paßfeder lassen sich in beide Richtungen der Welle die gleichen Momente übertragen. Die Herstellung einer solchen Wellen-Nabenverbindung ist relativ einfach und damit kostengünstig.

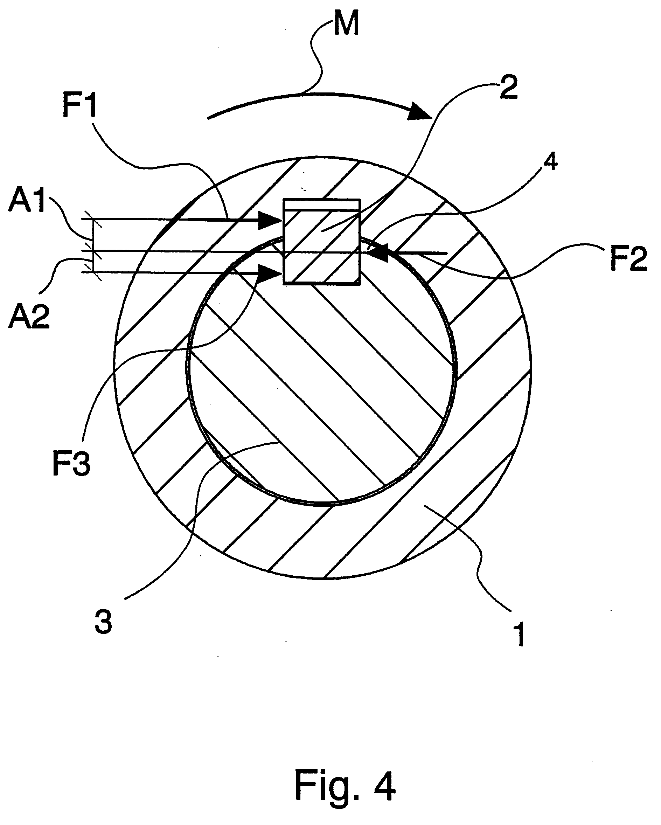

Bei der Übertragung eines Moments ergeben sich etwa die in der beigefügten Figur 4 dargestellten Kräfteverhältnisse. Eine aus einem Moment M resultierende Kraft F1 wirkt von einer Nabe 1 auf eine Paßfeder 2. Die Paßfeder 2 ist in zwei gegenüberliegenden Nuten der Nabe 1 und einer Welle 3 angeordnet. Die Kraft F1 wird von der Paßfeder 2 auf die Welle 3 übertragen und erzeugt eine Kraft F2, die von der Welle 3 auf die Paßfeder 2 wirkt. Das Kräftepaar F1, F2 erzeugt ein Moment auf die Paßfeder 2. Die Größe des Moments hängt von der Größe des Abstandes A1 zwischen den Kräften F1, F2 ab. Der Abstand A1 ergibt sich aus den Kantenbrüchen der Wellen- und Nabennut sowie aus der Elastizität der verwendeten Materialien (Kraftangriffspunkt ist in Wirklichkeit eine Fläche mit endlicher Ausdehnung). Dieses Moment kann zu einem Aufkippen oder Verdrehen der Paßfeder 2 führen. Das Aufkippen oder Verdrehen der Paßfeder 2 erfolgt innerhalb der Toleranzen von Nut und Paßfeder. Die Gegenflanke der Wellennut bildet ein Widerlager, von dem eine dritte Kraft F3 auf die Paßfeder 2 wirkt. Damit ist das Momentengleichgewicht wiederhergestellt und die Paßfeder verharrt eingeklemmt zwischen den beiden Flanken der Wellennut.

Praktische Versuche haben diese Modellierung der realen Verhältnisse bestätigt. Die Krafteinleitungspunkte zeichnen sich bei hohen Übertragungsmomenten in Form von Druckmarkierungen ab. Dabei erweist sich die spitzwinklige Ecke 4 der Wellennut als Schwachstelle. Gerade in diesem Bereich erfolgt jedoch die Krafteinleitung der größten Kraft F2, was lokal zu sehr hohen Material-beanspruchungen führt. Bei praktischen Versuchen hat sich gezeigt, daß die Wellen meistens im Bereich der spitzwinkligen Ecke 4 versagen. Durch ein zusätzlich auf die Welle aufgebrachtes Biegemoment wird dieser Effekt noch verstärkt. Das Hebelverhältnis A1/A2 an der Paßfeder definiert zudem die Höhe der Paßfeder und der zugehörigen Nuten. Aus Festigkeitsgründen und wegen der Gefahr eines Aufkippens oder Verdrehens der Paßfeder in der Nut, sollten die genormten Nutdimensionen nicht unterschritten werden. Damit sind aber auch die Schwächungen von Welle und Nabe gegeben, welche sich bei vielen Anwendungen störend bemerkbar machen (Stichwort: hohe Deformationen und Spannungen).

Aufgabe der vorliegenden Erfindung ist es, eine Wellen-Nabenverbindung mit mindestens einem Formschlußelement der eingangs geschilderten Art zu schaffen, mit der deutlich höhere Momente übertragen werden können, bei gleichzeitiger Verringerung des Materialabtrages an Welle und Nabe (Verstärkung), wobei die Eigenschaften der Paßfeder hinsichtlich Montage und Produktion erhalten werden sollen.

Es ist ebenfalls Aufgabe der vorliegenden Erfindung, eine Wellen-Nabenverbindung der eingangs geschilderten Art zu schaffen, die einen definierten und gut reproduzierbaren Kraftfluß von der Welle auf die Nabe gewährleistet, selbst wenn bei der Fertigung relativ große Toleranzen zugelassen werden.

Diese Aufgabe wird durch eine Wellen-Nabenverbindung gemäß dem Oberbegriff des Anspruchs 1 gelöst, die dadurch gekennzeichnet ist, daß die Nutflanken der Welle und der Nabe so angeordnet sind, daß die bei der Momentenübertragung auftretenden Kräfte annähernd auf einer Wirkungslinie liegen.

Durch diese Merkmale wird eine Wellen-Nabenverbindung mit einem Formschlußelement geschaffen, die bezüglich Funktion, Produktion und Montage praktisch die gleichen Eigenschaften wie bekannte Wellen-Nabenverbindungen mit Paßfeder oder Keil aufweisen. Der Kraftfluß bei der Momentenübertragung ist aber durch die besondere Geometrie der Nuten und des Formschlußelements optimiert. Mit der erfindungsgemäßen Wellen-Nabenverbindung können größere Momente übertragen werden als bei herkömmlichen Wellen-Nabenverbindungen, weil die Schwachstelle im Bereich der spitzwinkligen Ecke der Wellennut "entschärft" ist, und die Krafteinleitung nicht auf diese periphere Ecke konzentriert ist.

Der Kraftfluß gleicht dabei den Verhältnissen beim Tangentkeil (DIN 271 und DIN 268), was zu ähnlich hohen übertragbaren Momenten führt. Im Gegensatz zum Tangentkeil können erfindungsgemäß jedoch gleich große Momente in beiden Drehrichtungen mit nur einem Formschlußelement übertragen werden. Ferner ermöglicht die Symmetrie des Formschlußelements und der Nuten eine gegenüber dem Tangentkeil kostengünstigere Herstellung. Die Erfindung vereinigt also die guten Eigenschaften der beiden Verbindungsarten Tangentkeil (hohe übertragbare Drehmomente) und Paßfeder (einfache Handhabe und einfache Herstellbarkeit).

Das Formschlußelement weist erfindungsgemäß außerdem an mindestens einer tragenden Flanke eine stärkere Krümmung auf wie die der zugeordneten Nutflanke. Auf diese Weise bilden Wellennut, Nabennut und Formschlußelement ein statisch bestimmtes System, welches genau definierte Krafteinleitungsstellen besitzt, die sich wiederum nicht auf die spitzwinklige Ecke der Wellennut konzentrieren und deren Position nur geringfügig durch Herstelltoleranzen beeinflußt wird.

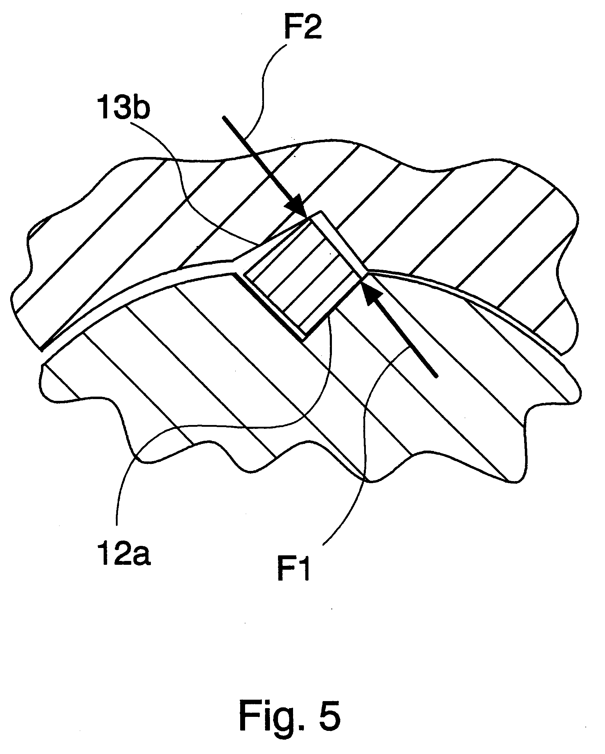

Dies steht ganz im Gegensatz zu vier- oder mehreckigen Formschußelementen, wo Nabe und Formschlußelement ein statisch überbestimmtes System bilden (siehe Figur 5). Das Formschlußelement kann nicht gleichzeitig an einer Wellennutflanke (z.B. 12a) und einer Nabennutflanke (z.B. 13b) anliegen. Das bedeutet, daß bei einem kleinen Winkelfehler einer Nabe die in Figur 5 dargestellten ungünstigen Verhältnisse auftreten. Eine der Kräfte F1 und F2 konzentriert sich an der Peripherie von Nabenbohrung oder Welle.

Als Variante der Erfindung ist eine Wellen-Nabenverbindung mit geraden Nabenflanken zu verstehen, bei der das Formschlußelement im Querschnitt mehrere Kreissegmente bildet. Hier wird das mechanische System bestehend aus Wellennut, Nabennut und Formschlußelement sogar statisch unterbestimmt. Die Kräfteverhältnisse bleiben auch bei einer Drehung des Formschlußelementes um die eigene Achse bestehen und befinden sich beide innerhalb der äußeren peripheren Kreise von Welle und Nabe. Diese Variante ist herstellungstechnisch interessant, da für das Formschlußelement von kreisrundem Stangenmaterial ausgegangen werden kann.

Durch die erfindungsgemäße Ausführung der Wellen-Nabenverbindung ist gewährleistet, daß bei der Übertragung eines Moments zwischen Welle und Nabe oder umgekehrt im Gegensatz zu herkömmlichen Wellen-Nabenverbindungen im wesentlichen nur noch ein Kräftepaar auftritt, das auf einer Achse liegt und folglich kein Moment auf das Formschlußelement ausübt. Ein Aufkippen oder Verdrehen des Formschlußelements ist sogar dann ausgeschlossen, wenn radial zwischen Formschlußelement und Nutgrund ein für den problemlosen Einbau ausreichendes Spiel vorgesehen ist. Wenn die Nutflanken der Welle und der Nabe so angeordnet sind, daß die bei der Momentenübertragung auftretenden Kräfte auf einer Wirkungslinie liegen, tritt die durch das Verdrehen des Formschlußelements verursachte dritte Kraft an der Gegenflanke der Wellennut nicht mehr auf. Bei der Übertragung eines Moments zwischen Welle und Nabe treten nur noch Kräfte auf, die zur Übertragung des Moments unerläßlich sind. Die Krafteinleitung erfolgt tangential in die Welle. Durch den direkten Kraftfluß zwischen Welle und Nabe werden für die Momentenübertragung nur sehr kleine Nutflanken benötigt, was bei geeigneter Wahl der Nuttiefe und des Winkels zwischen den Nutflanken zu kleinen Nutquerschnittsflächen führt. Daraus resultiert nur eine geringe Schwächung der Welle und der Nabe (Stichwort: Kerbwirkung).

Die vorliegende Erfindung kann sowohl in Mitnehmerverbindungen ohne Anzug (Paßfedern) als auch in Spannungsverbindungen mit Anzug (Keile) verwendet werden

Die Erfindung kann vorteilhaft im Bereich der Hydropumpen und -motoren eingesetzt werden, wo hohe Momente übertragen werden und Nabendeformationen unerwünschte Druckschwingungen hervorrufen können. Dies gilt insbesondere im Bereich der Zahnradpumpen und -motoren bei der Koppelung von Zahnrad und Welle (Innenzahnrad- wie auch Außenzahnradprinzip).

Eine wesentliche zusätzliche Versteifung der Nabe wird erfindungsgemäß durch eine asymmetrische Ausführung der Naben- oder Wellennut erreicht. Dies ist überall dort anwendbar, wo nicht in beide Richtungen große Momente übertragen werden müssen, also insbesondere wenn nur in eine Richtung Momente übertragen werden, wie dies z.B. bei Hydropumpen üblich ist. Trotzdem können für Maschinen unterschiedlicher Laufrichtung die gleichen Formschlußelemente produziert und verwendet werden. Diese können wegen der Symmetrie einer der Nuten (Welle oder Nabe) in die eine oder andere Richtung eingelegt und montiert werden.

Die vorliegende Erfindung betrifft ebenfalls ein Verfahren zum Herstellen der Nuten einer erfindungsgemäßen Wellen-Nabenverbindung. Das Herstellverfahren umfaßt die Bearbeitung der Welle und/oder der Nabe mit einem konischen bzw. kegelförmigen Fräswerkzeug.

Im folgenden wird die Erfindung anhand der beiliegenden Zeichnungen beispielhaft erläutert. Es zeigen:
Figuren 1 bis 3 jeweils einen Querschnitt durch drei unterschiedliche Ausführungsformen einer Wellen-Nabenverbindung nach der Erfindung.
Figur 4 die Kräfteverhältnisse bei der Momentenübertragung in einer herkömmlichen Wellen-Nabenverbindung.
Figur 5 ein statisch überbestimmtes System.

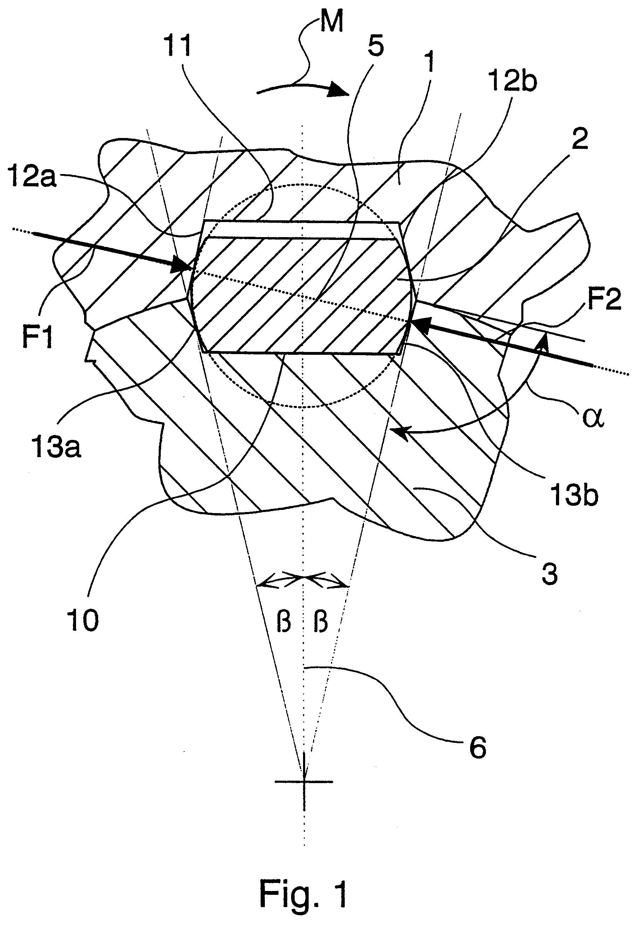

Wie aus Figur 1 hervorgeht ist bei einer ersten Ausführungsform einer Wellen-Nabenverbindung nach der Erfindung eine Nabe 1 durch einen Keil 2 formschlüssig mit einer Welle 3 verbunden. In der Welle 3 und in der Nabe 1 sind Nuten 10, 11 ausgespart. Die Wellennut 10 ist tangential durch zwei Wellennutflanken 13a, 13b begrenzt, die sich jeweils radial zur Welle 3 erstrecken. Die Nabennut 11 ist tangential durch zwei Nabennutflanken 12a, 12b begrenzt, die jeweils parallel zu den diagonal gegenüberliegenden Wellennutflanken 13b, 13a sind. Die Seitenränder des Keils sind im Bereich der Nutflanken 12a, 12b, 13a, 13b im Querschnitt gerundet. Bei der Übertragung eines Moments M von der Nabe 1 auf die Welle 3 wirken Kräfte F1, F2 diagonal in der Querschnittsebene durch den Keil 2. Die Kraft F1 wirkt von der Nabe 1 auf den Keil 2 und die Kraft F2 wirkt von der Welle 3 auf den Keil 2. Unter Berücksichtigung der axialen Ausdehnung des Keils 2 und der Nuten 10, 11 ergibt sich eine linienförmige Krafteinleitung.

Bei der ersten Ausführungsform in Figur 1 weisen die Nuten 10, 11 jeweils einen trapezförmigen Querschnitt auf. Infolge des runden Querschnitts des Keils 2 im Bereich der Nutflanken 12a, 12b, 13a, 13b wirken die Kräfte F1, F2 auf einer Linie 5. Die Wellennutflanken 13a, 13b sind jeweils um einen Winkel β gegenüber einer Symmetrieebene 6 geneigt, die durch den Mittelpunkt der Welle 3 verläuft. Die beim Stand der Technik eingangs aufgezeigte Schwachstelle 4 (Figur 4) ist bei der in Figur 1 gezeigten erfindungsgemäßen Ausführungsform nicht mehr vorhanden. Der Winkel α zwischen Umfang und Radius der Welle beträgt 90° und ist somit erheblich größer als der aus dem Stand der Technik bekannte spitze Winkel an der Stelle 4 in Figur 4.

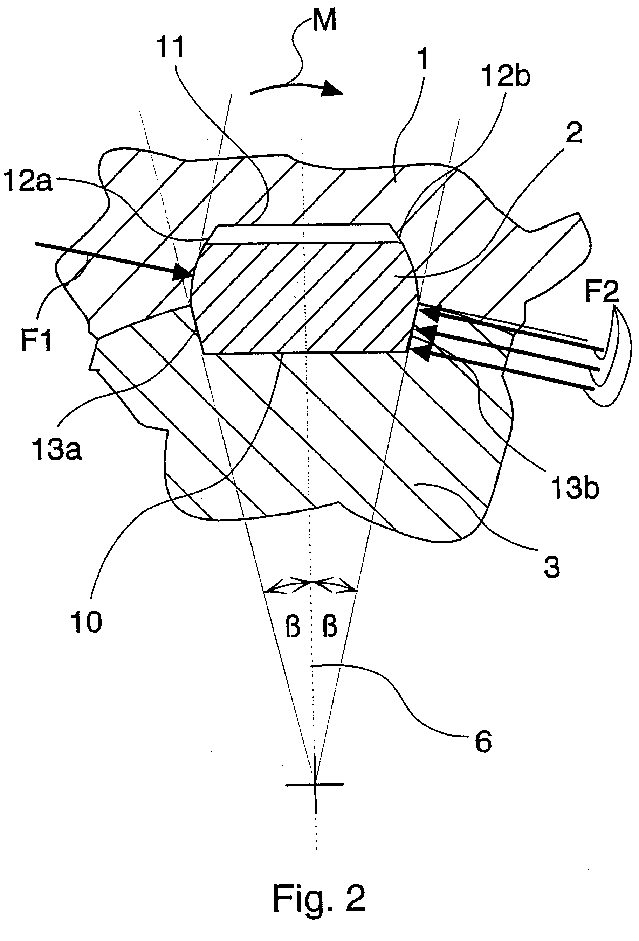

Die Figur 2 zeigt eine zweite Ausführungsform der erfindungsgemäßen Wellen-Nabenverbindung, bei der die gleichen Figurenbezeichnungen verwendet werden wie in Figur 1. Bei dieser Ausführungsform ist der untere Teil des Keils 2 im Bereich der Wellennutflanken 13a, 13b jedoch nicht gerundet sondern gerade. Dieser Bereich des Keils 2 kommt daher bei einer Momentenübertragung mit den Wellennutflanken 13a, 13b in Anlage. Durch die trapezförmige Ausbildung des Keils 2 im Bereich der Welle 3 erfolgt die Einleitung der Kraft F2 über die Fläche der Nutflanke 13b verteilt. Zur Reduktion der Hertz'schen Pressung sind die Flanken 12a, 12b der Nabennut 11 bombiert ausgeführt.

Die für eine Richtung des Moments M dargelegten Ausführungen gelten selbstverständlich analog, wenn das Moment M in der entgegengesetzten Richtung aufgebracht wird. Ebenso ist der Erfindungsgedanke verwirklicht, wenn ein Moment statt wie hier gezeigt von der Nabe auf die Welle von der Welle auf die Nabe übertragen wird. Die Erfindung ist natürlich auch verwirklicht, wenn die Wellennutflanken nicht genau auf Wellenradien angeordnet sind, sondern um einige Grade von dem jeweiligen Radius abweichen, solange die diagonal gegenüberliegenden Wellennutflanken parallel zueinander sind und die bei der Momentenübertragung auftretenden Kräfte annähernd auf einer einzigen Wirkungslinie liegen. Ansonsten können die Parameter Nuttiefen und Winkel α, β frei gewählt werden.

Eine trapezförmige Ausbildung des Keils im Bereich der Wellen- und Nabennut ist nicht zu empfehlen, da die Verbindung dadurch überbestimmt würde.

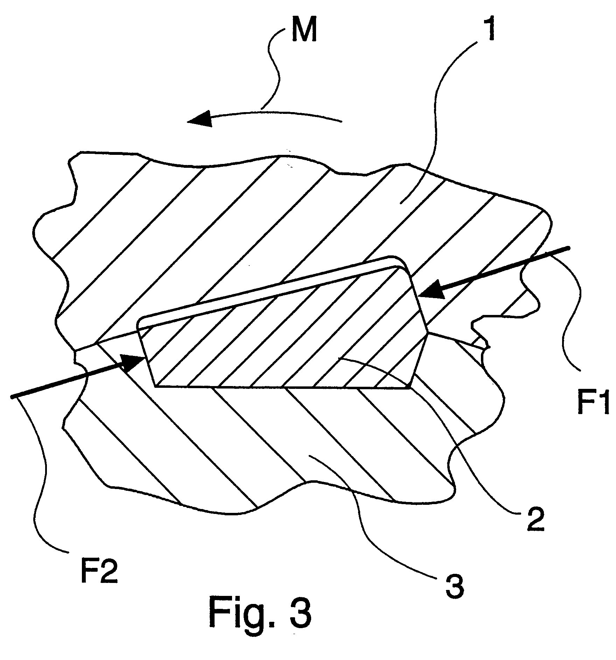

Die in Figur 3 gezeigte dritte Ausführungsform einer Wellen-Nabenverbindung nach der Erfindung ist aus der in Figur 1 gezeigten Ausführungsform abgeleitet. Analoge Bezugszeichen der Figuren 1 und 3 sind identisch verwendet worden. Bei der in Figur 3 gezeigten Ausführungsform ist der Materialabtrag von der Nabe minimiert, um eine möglichst geringe Kerbwirkung zu erreichen. Daraus resultiert eine Keilverbindung mit asymmetrischer Form, bei der hohe Momente nur in einer Richtung übertragen werden können. Bei der Übertragung eines Moments M liegt die Kraft F1 jedoch auch auf einer Wirkungslinie mit der Kraft F2.

## Patentansprüche

1. Wellen-Nabenverbindung mit mindestens einem Formschlußelement zur Momentenübertragung zwischen einer Welle und einer Nabe oder umgekehrt, wobei Welle und Nabe jeweils mindestens eine Nut mit gegenüberliegenden Nutflanken zur Aufnahme des Formschlußelements bzw. der Formschlußelemente umfassen und die gegenüberliegenden Nutflanken der Welle im Querschnitt im wesentlichen radial zu der Welle angeordnet sind,
dadurch gekennzeichnet,
daß die Nutflanken (12a, 12b, 13a, 13b) der Welle (3) und der Nabe (1) so angeordnet sind, daß die bei der Momentenübertragung auftretenden Kräfte (F1, F2) auf einer Wirkungslinie (5) liegen und
daß der Querschnitt des Formschlußelements (2) an mindestens einer Stelle der Nutflanken (12a, 12b, 13a, 13b) eine größere Krümmung aufweist als die zugehörige Nutflanke selber.

2. Wellen-Nabenverbindung nach Anspruch 1,
dadurch gekennzeichnet,
daß durch eine Abweichung von der Symmetrie der Nut eine zusätzliche Verstärkung von Welle oder Nabe realisiert wird, ohne die Eigenschaften in der Übertragungsrichtung des Momentes zu beeinträchtigen.

3. Wellen-Nabenverbindung nach Anspruch 2,
dadurch gekennzeichnet,
daß das Formschlußelement im wesentlichen einen trapez- oder polygonförmigen Querschnitt aufweist.

4. Wellen-Nabenverbindung nach einem der vorhergehenden Ansprüche,
dadurch gekennzeichnet,
daß die Wellennutflanken (13a, 13b) und die jeweils diagonal gegenüberliegenden Nabennutflanken (12a, 12b) bezüglich der Mittelsenkrechten über der Verbindungsstrecke zwischen den Angriffspunkten der bei der Momentenübertragung auftretenden Kräften symmetrisch zueinander sind.

5. Wellen-Nabenverbindung nach einem der vorhergehenden Ansprüche,
dadurch gekennzeichnet,
daß die Wellennutflanken (13a, 13b) und die jeweils diagonal gegenüberliegenden Nabennutflanken (12a, 12b) im wesentlichen parallel zueinander angeordnet sind.

6. Wellen-Nabenverbindung nach einem der vorhergehenden Ansprüche,
dadurch gekennzeichnet,
daß die Nuten (10, 11) der Welle (3) und der Nabe (1) jeweils eine Symmetrieebene aufweisen.

7. Wellen-Nabenverbindung nach einem der vorhergehenden Ansprüche,
dadurch gekennzeichnet,
daß die Querschnittsfläche des Formschlußelements (2) eine Symmetrieebene (6) aufweist.

8. Wellen-Nabenverbindung nach einem der vorhergehenden Ansprüche,
dadurch gekennzeichnet,
daß die Nutflanken (12a, 12b, 13a, 13b) der Welle (3) und/oder der Nabe (1) im Querschnitt gerade verlaufen.

9. Wellen-Nabenverbindung nach einem der vorhergehenden Ansprüche,
dadurch gekennzeichnet,
daß die Nutflanken (12a, 12b, 13a, 13b) der Welle (3) und/oder der Nabe (1) bombiert sind.

10. Wellen-Nabenverbindung nach einem der vorhergehenden Ansprüche
dadurch gekennzeichnet,
daß die Wellen- und die Nabennut (10, 11) im Querschnitt jeweils die Form eines gleichschenkligen Trapezes aufweisen, wobei die Öffnungsseiten der Trapeze einander zugewandt sind.

11. Wellen-Nabenverbindung nach einem der vorhergehenden Ansprüche,
dadurch gekennzeichnet,
daß das Formschlußelement (2) bzw die Formschlußelemente und die Nuten (10, 11) beliebige axiale Dimensionen aufweisen.

12. Wellen-Nabenverbindung nach einem der vorhergehenden Ansprüche,
dadurch gekennzeichnet,
daß das Formschlußelement (2) bzw. die Formschlußelemente und die Nuten (10, 11) in radialer Richtung kleinere Dimensionen aufweisen als in tangentialer Richtung.

13. Wellen-Nabenverbindung nach einem der vorhergehenden Ansprüche,
dadurch gekennzeichnet,
daß die axialen Enden des Formschlußelements (2) bzw. der Formschlußelemente abgerundet sind.

14. Verfahren zum Herstellen der Nuten einer Wellen-Nabenverbindung nach einem der vorhergehenden Ansprüche,
dadurch gekennzeichnet,
daß die Welle (3) und/oder die Nabe (1) mit einem konischen oder kegelförmigen Fräswerkzeug bearbeitet wird.
